# EUROPEAN PATENT APPLICATION

(11) **EP 2 579 664 A1**
(43) Date of publication of application: **10.04.2013**
(21) Application number: 11789163.0
(22) Date of filing: 30.05.2011
(51) Int. Cl.: H04W 72/04

(54) **METHOD AND APPARATUS FOR TRANSMITTING DOWNLINK CHANNEL MEASUREMENT REFERENCE SIGNAL AND METHOD AND APPARATUS FOR RECEIVING DOWNLINK CHANNEL MEASUREMENT REFERENCE SIGNAL**

(30) Priority: 31.05.2010 CN 201010195421
(71) Applicant: China Mobile Communications Corporation, Beijing 100032 (CN)
(72) Inventor: XU, Xiaodong, Beijing 100032 (CN); SHI, Zhihua, Beijing 100032 (CN); LIU, Jianjun, Beijing 100032 (CN); WANG, Qixing, Beijing 100032 (CN); LIU, Guangyi, Beijing 100032 (CN)
(74) Representative: Körfer, Thomas
(86) International application number: PCT/CN2011/074840
(87) International publication number: WO 2011/150784

(57) **Abstract**

A method and apparatus for transmitting a downlink channel measurement reference signal and a method and apparatus for receiving the downlink channel measurement reference signal are provided in the present invention. The transmission method comprises the following steps: a network side determines other Orthogonal Frequency Division Multiplexing (OFDM) symbols except the OFDM symbols used for transmitting control signal, the OFDM symbols used for transmitting the Cell specific Reference Signal (CRS) and the OFDM symbols used for transmitting the Demodulation Reference Signal (DM-RS), and transmitting the downlink channel measurement reference signal (CSI-RS) on the determined other OFDM symbols. The specific solution that a transmitter transmits the downlink channel measurement reference signal and a UE receives the CSI-RS signal is provided by the present invention , and transmitter could transmit and receive the CSI-RS signal according to the solution provided by the present invention.

## Description

This application claims the benefit of Chinese Patent Application No. 201010195421.6, filed with the Chinese Patent Office on May 30, 2010 and entitled "Method and apparatus for transmitting downlink channel measurement reference signal and method and apparatus for receiving downlink channel measurement reference signal", which is hereby incorporated by reference in its entirety.

### Field of the Invention

The present invention relates to the field of mobile communications and particularly to a method and apparatus for transmitting a downlink channel measurement reference signal and a method and apparatus for receiving a downlink channel measurement reference signal.

### Background of the Invention

A Reference Signal (RS) is a known signal provided by a transmitter to a receiver for the receiver to perform channel estimation or channel measurement. At present, four RSs have been defined in the 3rd Generation Partnership Project (3GPP): a Cell specific Reference Signal (CRS) of a Release 8 system (R8), a user Dedicated Reference Signal (DRS) of R8, a Demodulation Reference Signal (DM-RS) of a Release 10 system (R10), and a downlink channel measurement reference signal (also known as Channel State Information Reference Signal, CSI-RS) of R10.

In an Orthogonal Frequency Division Multiplexing (OFDM) system, a Physical Resource Block (PRB) occupies 14 or 12 OFDM symbols in the time domain and 12 sub-carriers in the frequency domain, and in the PRB, RS signals are given in units of Resource Element (RE) and an RS signal occupies several REs in the PRB.

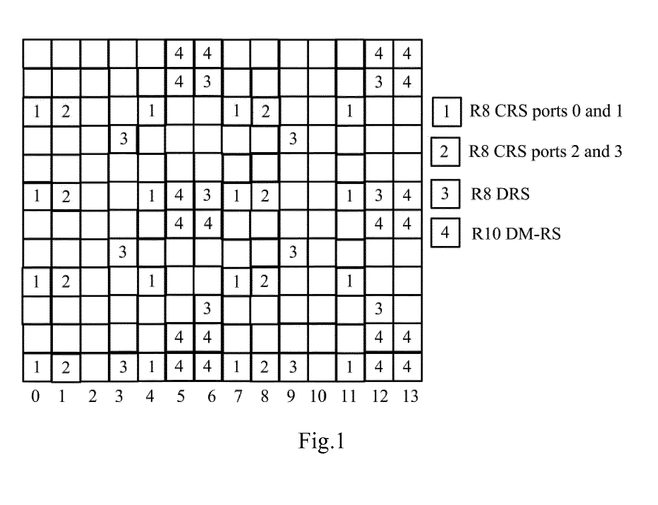

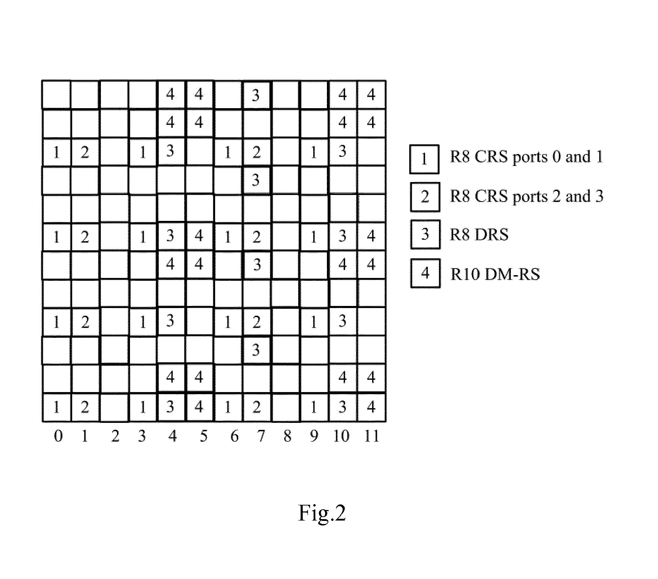

At present, methods for transmitting a CRS of R8, a DRS of R8 and a DM-RS of R10, i.e., specific REs occupied for transmitting the three RSs, have been defined. Reference can be made to Fig.1 and Fig.2 for details.

Fig.1 is a schematic diagram of transmitting an RS signal in a physical resource block with a general Cyclic Prefix (CP) in the prior art.

Fig.2 is a schematic diagram of transmitting an RS signal in a physical resource block with an extended CP in the prior art.

At present, an agreement has also been made about an RE overhead for transmitting a CSI-RS signal via 2 CSI-RS ports, 4 CSI-RS ports and 8 CSI-RS ports: only one RE is occupied for transmitting a CSI-RS via each CSI-RS port.

However a specific technical solution to particularly how a transmitter transmits a downlink channel measurement reference signal (CSI-RS) has been absent in the prior art, and a specific technical solution to how a User Equipment (UE) receives a CSI-RS signal has also been absent in the prior art.

### Summary of the Invention

In view of this, embodiments of the invention provide a method and apparatus for transmitting and a method and apparatus for receiving a downlink channel measurement reference signal in order to provide specific solutions to transmission of a CSI-RS by a transmitter and to reception of a CSI-RS signal by a UE.

The technical solutions of the embodiments of the invention are particularly achieved as follow:

A method for transmitting a downlink channel measurement reference signal, the method including:
determining at the network side other Orthogonal Frequency Division Multiplexing, OFDM, symbols than an OFDM symbol for transmitting a control signal, an OFDM symbol for transmitting a Cell specific Reference Signal, CRS, and an OFDM symbol for transmitting a Demodulation Reference Signal, DM-RS; and
transmitting a Channel State Information Reference Signal, CSI-RS, on the determined other OFDM symbols.

An apparatus for transmitting a Channel State Information Reference Signal, the apparatus including a resource determining module and a transmitting module, wherein:
the resource determining module is configured to determine other Orthogonal Frequency Division Multiplexing, OFDM, symbols than an OFDM symbol for transmitting a control signal, an OFDM symbol for transmitting a Cell specific Reference Signal, CRS, and an OFDM symbol for transmitting a Demodulation Reference Signal, DM-RS; and
the transmitting module is configured to transmit a Channel State Information Reference Signal, CSI-RS, on the determined other OFDM symbols.

A method for transmitting a Channel State Information Reference Signal, the method including:
when a Channel State Information Reference Signal, CSI-RS, is transmitted via eight CSI-RS ports from the network side, pre-assigning every two CSI-RS signal transmitting ports to a group of CSI-RS ports;
determining at the network side other Orthogonal Frequency Division Multiplexing, OFDM, symbols than an OFDM symbol for transmitting a control signal, an OFDM symbol for transmitting a Cell specific Reference Signal, CRS, and an OFDM symbol for transmitting a Demodulation Reference Signal, DM-RS; and
transmitting the CSI-RS signal on the determined other OFDM symbols via each group of CSI-RS ports in a Physical Resource Block, PRB, configured with a general Cyclic Prefix, CP, by:
   transmitting the CSI-RS signal through Code Division Multiplexing, CDM, in the time domain over the same sub-carriers, on an Orthogonal Frequency Division Multiplexing, OFDM, symbol 8 and an OFDM symbol 10, for each group of CSI-RS ports, wherein the sub-carriers respectively for the four groups of CSI-RS ports are different; or
   transmitting the CSI-RS signal over two adjacent sub-carriers, on the OFDM symbol 8 or two adjacent sub-carriers, on the OFDM symbol 10, for each group of CSI-RS ports, wherein the sub-carriers, for any two groups of CSI-RS ports, distributed on the different OFDM symbols are the same or different, and the sub-carriers, for any two groups of CSI-RS ports, distributed on the same OFDM symbols are adjacent or spaced by another or other sub-carriers.; or
   transmitting the CSI-RS signal over two adjacent sub-carriers for each group of CSI-RS ports, wherein the CSI-RS signal is transmitted on the OFDM symbol 8 or 10 via all of the four groups of CSI-RS ports; and the sub-carriers for the four groups of CSI-RS ports are adjacent or the sub-carriers for the four groups of CSI-RS ports are spaced at a fixed interval;
   transmitting the CSI-RS signal through CDM in the time domain over the same other sub-carriers, than sub-carriers occupied by a Release 8 user Dedicated Reference Signal, DRS, signal, on an OFDM symbol 9 and the OFDM symbol 10, for each group of CSI-RS ports, wherein the sub-carriers respectively for the four groups of CSI-RS ports are different; or
   transmitting the CSI-RS signal through CDM in the time domain over the same other sub-carriers, than sub-carriers occupied by a DRS signal, on the OFDM symbol 8 and the OFDM symbol 9, for each group of CSI-RS ports, wherein the sub-carriers respectively for the four groups of CSI-RS ports are different.

An apparatus for transmitting a Channel State Information Reference Signal, the apparatus including a resource determining module and a transmitting module, wherein:
the resource determining module is configured to determine other Orthogonal Frequency Division Multiplexing, OFDM, symbols than an OFDM symbol for transmitting a control signal, an OFDM symbol for transmitting a Cell specific Reference Signal, CRS, and an OFDM symbol for transmitting a Demodulation Reference Signal, DM-RS; and
the transmitting module is configured, when a Channel State Information Reference Signal, CSI-RS, is transmitted via eight CSI-RS ports, to pre-assign every two CSI-RS signal transmitting ports to a group of CSI-RS ports and to transmit the CSI-RS signal on the determined other OFDM symbols via each group of CSI-RS ports in a Physical Resource Block, PRB, configured with a general Cyclic Prefix, CP, wherein the same sub-carriers on an Orthogonal Frequency Division Multiplexing, OFDM, symbol 8 and an OFDM symbol 10 in each PRB are occupied by each group of CSI-RS ports for transmitting the CSI-RS signal through Code Division Multiplexing, CDM, in the time domain, and the sub-carriers occupied respectively by the four groups of CSI-RS ports are different; or two adjacent sub-carriers on the OFDM symbol 8 or two adjacent sub-carriers on the OFDM symbol 10 in each PRB are occupied respectively by each group of CSI-RS ports for transmitting the CSI-RS signal, wherein the sub-carriers, occupied by any two groups of CSI-RS ports, distributed on the different OFDM symbols are the same or different, and the sub-carriers, occupied by any two groups of CSI-RS ports, distributed on the same OFDM symbols are adjacent or spaced by another or other sub-carriers; or two adjacent sub-carriers are occupied by each group of CSI-RS ports for transmitting the CSI-RS signal, and the CSI-RS signal is transmitted on the OFDM symbol 8 or 10 in each PRB via all of the four groups of CSI-RS ports, and the sub-carriers occupied by the four groups of CSI-RS ports are adjacent or the sub-carriers occupied by the four groups of CSI-RS ports are spaced at a fixed interval; or the same other sub-carriers, than sub-carriers occupied by a user Dedicated Reference Signal, DRS, signal, on an OFDM symbol 9 and the OFDM symbol 10 in each PRB are occupied by each group of CSI-RS ports for transmitting the CSI-RS signal through CDM in the time domain, and the sub-carriers occupied respectively for the four groups of CSI-RS ports are different; or the same other sub-carriers, than sub-carriers occupied by a DRS signal, on the OFDM symbol 8 and the OFDM symbol 9 in each PRB are occupied by each group of CSI-RS ports for transmitting the CSI-RS signal through CDM in the time domain, and the sub-carriers occupied respectively for the four groups of CSI-RS ports are different.

A method of receiving a Channel State Information Reference Signal, the method including:
a User Equipment, UE, determining other Orthogonal Frequency Division Multiplexing, OFDM, symbols at the network side than an OFDM symbol for transmitting a control signal, an OFDM symbol for transmitting a Cell specific Reference Signal, CRS, and an OFDM symbol for transmitting a Demodulation Reference Signal, DM-RS; and
receiving a Channel State Information Reference Signal, CSI-RS, over the determined other OFDM symbols.

An apparatus for receiving a Channel State Information Reference Signal, the apparatus including a resource determining module and a transmitting module, wherein:
the resource determining module is configured to determine other Orthogonal Frequency Division Multiplexing, OFDM, symbols at the network side than an OFDM symbol for transmitting a control signal, an OFDM symbol for transmitting a Cell specific Reference Signal, CRS, and an OFDM symbol for transmitting a Demodulation Reference Signal, DM-RS; and
the receiving module is configured to receiving a Channel State Information Reference Signal, CSI-RS, on the determined other OFDM symbols.

As can be apparent from the foregoing technical solutions, the invention considers that all of the control signal, the DM-RS signal and the CRS signal have far higher power than the CSI-RS signal, and thus interference of the control signal, the DM-RS signal and the CRS signal to the CSI-RS signal can be avoided by transmitting the CSI-RS signal on the other OFDM symbols than the OFDM symbols for transmitting the control signal, the OFDM symbols for transmitting the CRS signal and the OFDM symbols for transmitting the DM-RS signal.

### Brief Description of the Drawings

Fig.1 is a schematic diagram of transmitting an RS signal in a physical resource block with a general CP in the prior art;

Fig.2 is a schematic diagram of transmitting an RS signal in a physical resource block with an extended CP in the prior art;

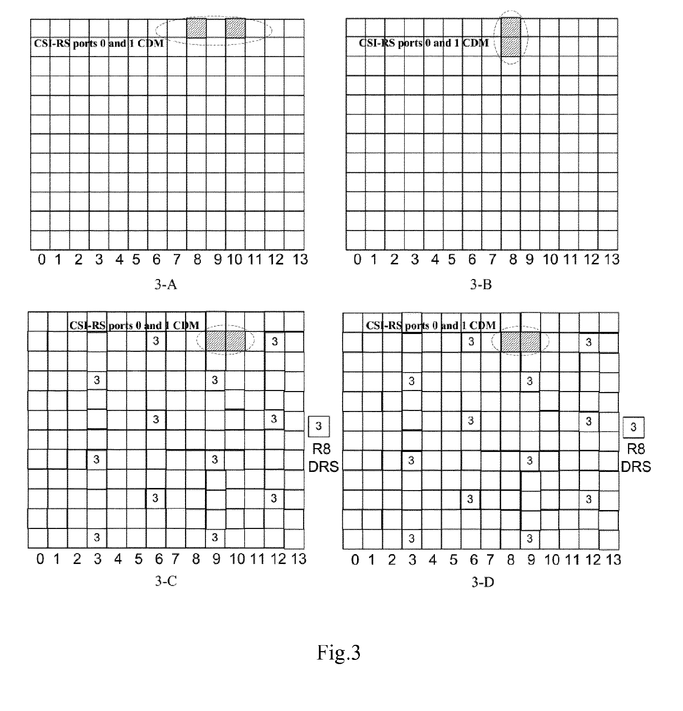

Fig.3 illustrates CSI-RS patterns of a general CP when the number of CSI-RS ports is 2 according to an embodiment of the invention;

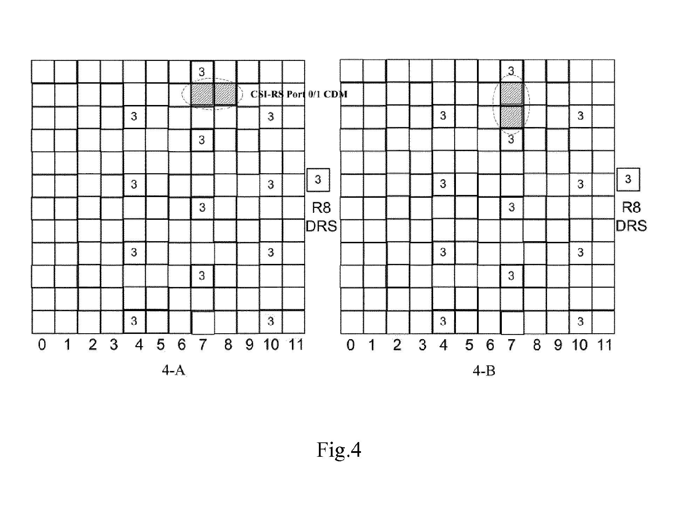

Fig.4 illustrates CSI-RS patterns of an extended CP when the number of CSI-RS ports is 2 according to an embodiment of the invention;

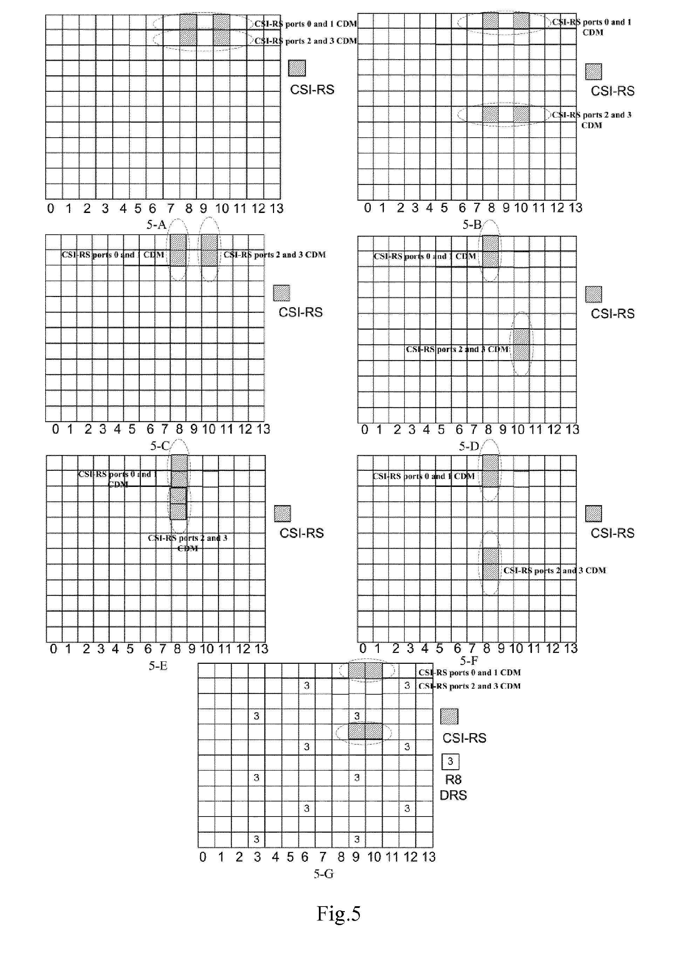

Fig.5 illustrates CSI-RS patterns of a general CP when the number of CSI-RS ports is 4 and a port 2 and a port 3 of a CSR signal are not configured at the network side according to an embodiment of the invention;

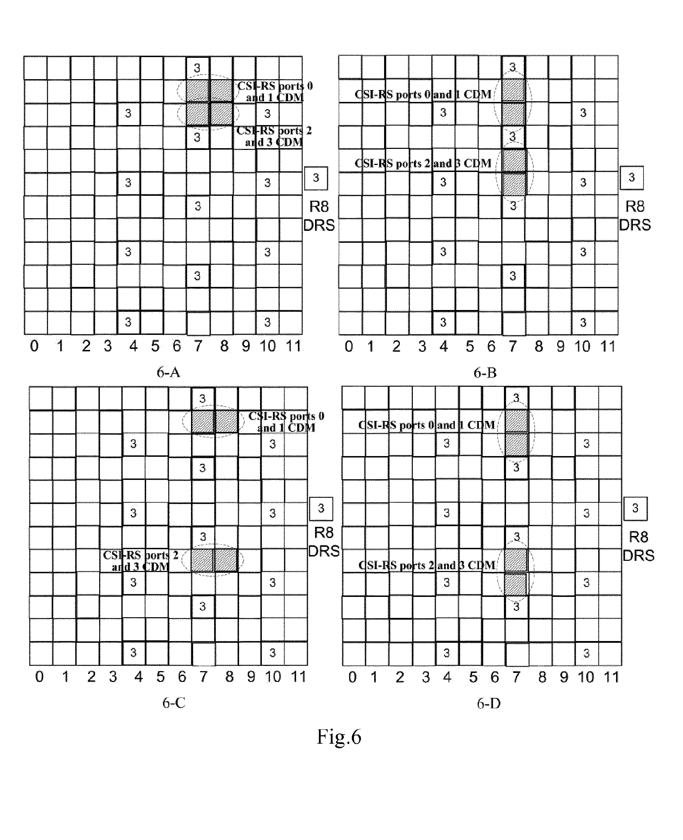

Fig.6 illustrates CSI-RS patterns of an extended CP when the number of CSI-RS ports is 4 and a port 2 and a port 3 of a CSR signal are not configured at the network side according to an embodiment of the invention;

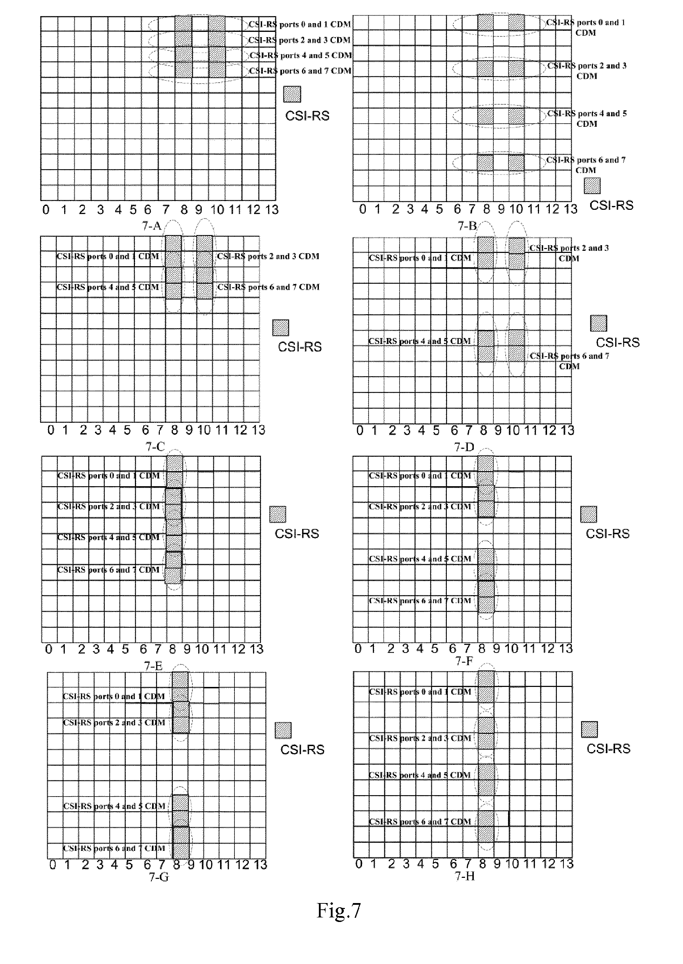

Fig.7 illustrates CSI-RS patterns of a general CP when the number of CSI-RS ports is 8 and a port 2 and a port 3 of a CSR signal are not configured at the network side according to an embodiment of the invention;

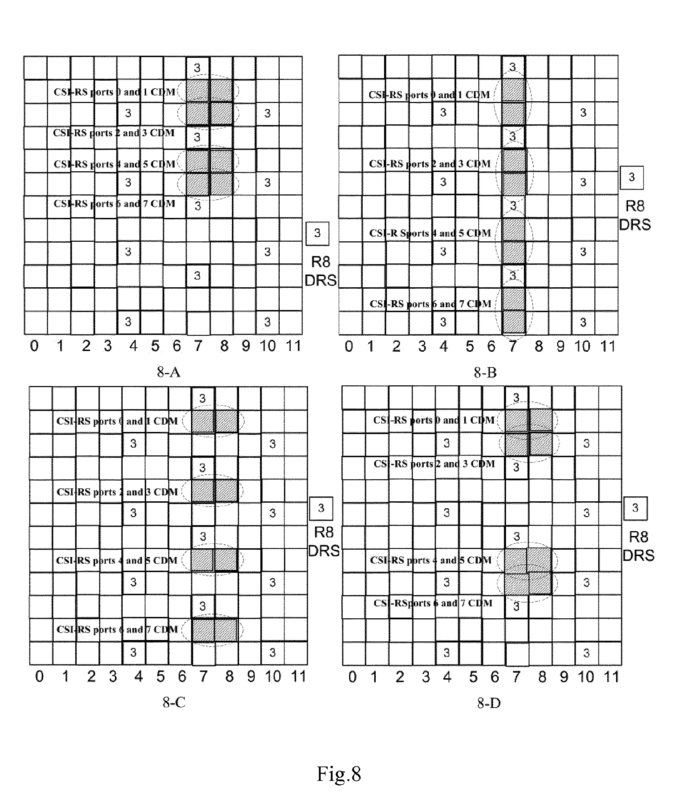

Fig.8 illustrates CSI-RS patterns of an extended CP when the number of CSI-RS ports is 8 and a port 2 and a port 3 of a CSR signal are not configured at the network side according to an embodiment of the invention;

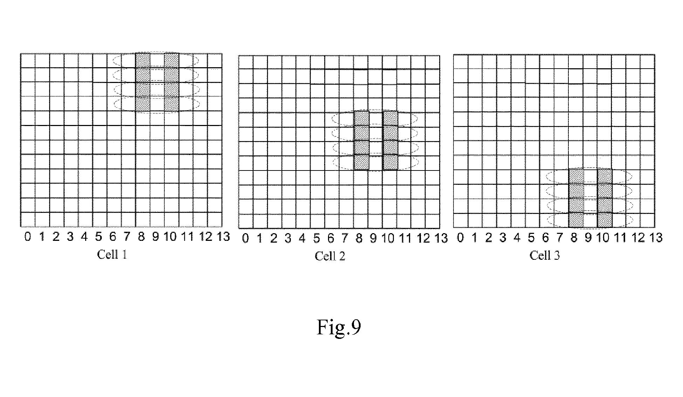

Fig.9 is a schematic diagram of frequency-shifting a CSI-RS pattern when the number of CSI-RS ports is 8 according to an embodiment of the invention;

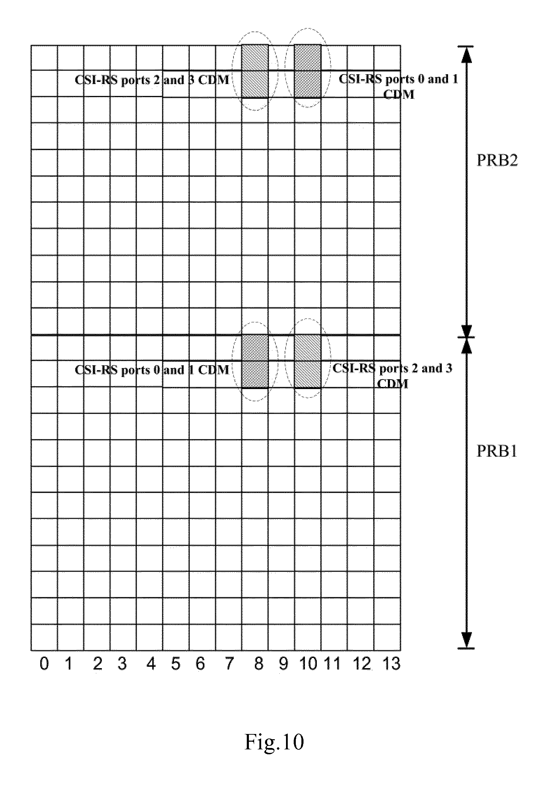

Fig.10 is a schematic diagram of transmitting a CSI-RS signal alternately on an OFDM symbol 8 and an OFDM 10 in any two adjacent PRBs in the frequency domain via a group of CSI-RS ports according to an embodiment of the invention;

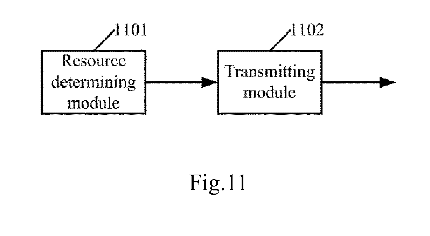

Fig.11 is a schematic structural diagram of an apparatus for transmitting a Channel State Information Reference Signal according to an embodiment of the invention; and

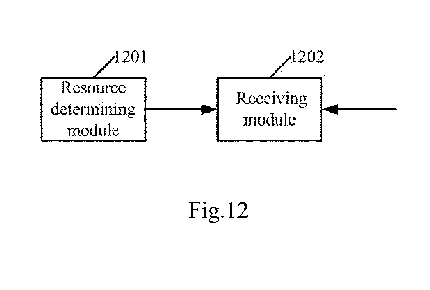

Fig.12 is a schematic structural diagram of an apparatus for receiving a Channel State Information Reference Signal according to an embodiment of the invention.

### Detailed Description of the Embodiments

In an embodiment of the invention, other OFDM symbols than OFDM symbols for transmitting a control signal, OFDM symbols for transmitting a Cell specific Reference Signal (CRS) and OFDM symbols for transmitting a Demodulation Reference Signal (DM-RS) is determined at the network side, and a Channel State Information Reference Signal, CSI-RS, is transmitted on the determined other OFDM symbols. Since all of the control signal, the DM-RS signal and the CRS signal have far higher power than the CSI-RS signal, interference of the control signal, the DM-RS signal and the CRS signal to the CSI-RS signal can be avoided by transmitting the CSI-RS signal on the other OFDM symbols than the OFDM symbols for transmitting the control signal, the OFDM symbols for transmitting the CRS signal and the OFDM symbols for transmitting the DM-RS signal, where the DM-RS signal is a specific Reference Signal (RS) of a UE in the LTE Rel-9 and later.

Preferably in the embodiment of the invention, the CSI-RS can further be transmitted in other REs, than REs occupied for transmitting a DRS, on the determined other OFDM symbols, where a carrier on an OFDM symbol is an RE, and the DRS includes a user Dedicated Reference Signal of Release 8 (R8 DRS). That is, the CSI-RS signal can be transmitted over other carriers, than carriers occupied by a DRS, on OFDM symbols for transmitting the DRS because the DRS signal has equivalent transmission power to that of the CSI-RS signal and the DRS signal will not influence correct reception of the CSI-RS signal even if the CSI-RS signal and the DRS signal are transmitted on the same OFDM symbol as long as these two signals are transmitted over different carriers on the OFDM symbol.

Typically there are a plurality of ports for transmitting the CSI-RS signal at the network side, and the ports for transmitting the CSI-RS signal are pre-allocated to several groups, typically, every two ports for transmitting CSI-RS signal are assigned to one group of CSI-RS ports, and the CSI-RS signal is transmitted at the network side on the determined other OFDM symbols via the assigned-to group or groups of CSI-RS ports, where the CSI-RS signal can be transmitted through frequency division multiplexing or time division multiplexing via different groups of CSI-RS ports, and correspondingly, transmission of the CSI-RS signal via different ports in the same group of CSI-RS ports can be distinguished by Code Division Multiplexing (CDM) in the time domain or in the frequency domain.

Specifically the CSI-RS signal is transmitted over different sub-carriers for different groups of CSI-RS ports, and the CSI-RS signal transmitted over the same sub-carriers for different CSI-RS ports in the same group of CSI-RS ports is distinguished by CDM in the time domain; or the CSI-RS signal is transmitted on different OFDM symbols for different groups of CSI-RS ports, and the CSI-RS signal transmitted on the same OFDM symbol via different CSI-RS ports in the same group of CSI-RS ports is distinguished by CDM in the frequency domain.

Particularly transmission of the CSI-RS signal on different OFDM symbols via different groups of CSI-RS ports involves two scenarios, in one of which the CSI-RS signal is transmitted on different OFDM symbols and over the same sub-carriers via different groups of CSI-RS ports, and in the other of which the CSI-RS signal is transmitted on different OFDM symbols and over different sub-carriers via different groups of CSI-RS ports.

In order to transmit the CSI-RS signal at a high power as possible, when the CSI-RS signal via different groups of CSI-RS ports is distinguished through time division multiplexing, the CSI-RS signal can further be transmitted respectively on different OFDM symbols (referred to a first OFDM symbol and a second OFDM symbol) in any two adjacent Physical Resource Blocks (PRBs) in any group of CSI-RS port in the invention, and as such, when the CSI-RS signal is transmitted on the first OFDM symbol in each physical resource block, the CSI-RS signal is transmitted on the second OFDM symbol in the physical resource block adjacent thereto, so that the CSI-RS signal is transmitted at a high power as possible in each physical resource block by virtue of transmission power of the adjacent physical resource block on the first OFDM symbol. For example, every two adjacent PRBs can be assigned to a group, the CSI-RS signal transmitted via different CSI-RS ports can be distinguished through CDM in the frequency domain in each group of CSI-RS ports, and the CSI-RS signal is transmitted respectively on different OFDM symbols in these two adjacent PRBs via groups of CSI-RS ports, for example, the CSI-RS signal is transmitted on OFDM symbols alternating in location respectively in the two PRBs via two groups of CSI-RS ports (reference can be made to the following relevant description of Fig.10 for details).

Furthermore in order to alleviate interference of the CSI-RI signals between adjacent cells, the CSI-RI signal shall be prevented from being transmitted over the same sub-carriers on the same OFDM symbol in the adjacent cells, that is, the CSI-RI signal shall be transmitted over different sub-carriers on the same OFDM symbol in the adjacent cells, and thus a multiplexing factor of a transmission pattern of the CSI-RI signal (CSI-RS pattern) shall be made as large as possible for the sake of convenient networking, and typically the multiplexing factor is larger than 3.

Specifically the CSI-RI signal is transmitted over orthogonal sub-carriers on the same OFDM symbols among the determined other OFDM symbols in a predetermined number of adjacent cells, that is, the CSI-RS is transmitted in the adjacent cells over frequency division multiplexed resources; or the CSI-RI signal is transmitted on different OFDM symbols among the other OFDM symbols in a predetermined number of adjacent cells, that is, the CSI-RS is transmitted in the adjacent cells over time division multiplexed resources; or the CSI-RI signal is transmitted on different OFDM symbol among the other OFDM symbols and over orthogonal sub-carriers in combination in a predetermined number of adjacent cells, that is, the CSI-RS is transmitted in the adjacent cells over both frequency division multiplexed and time division multiplexed resources.

Specific methods of transmitting a CSI-RS signal in a general CP and an extended CP and corresponding CSI-RS patterns will be given below with respect to the foregoing method of transmitting a CSI-RS signal.

As illustrated in Fig.1, a general CP is composed of 14 OFDM symbols numbered respectively an OFDM symbol 0 to an OFDM symbol 13, and the general CP has 12 sub-carriers in the frequency domain.

The OFDM symbol 10 of the general CP is not occupied by a control signal, a CRS signal, a DM-RS signal and a DRS signal, and thus a CSI-RS signal can be transmitted over any sub-carrier on the OFDM symbol 10.

Any sub-carrier on the OFDM symbol 3 and the OFDM symbol 9 of the general CP is not occupied by a control signal, a CRS signal and a DM-RS signal, and only a part of the sub-carriers on the OFDM symbol 3 and the OFDM symbol 9 are occupied by a DRS signal, and thus a CSI-RSI signal can be transmitted over the sub-carriers, which are not occupied by a DRS signal, on the OFDM symbol 3 and the OFDM symbol 9.

Referring to Fig.1, when the general CP is configured only with a port 0 and a port 1 of a CRS signal but not configured with a port 2 and a port 3 of the CRS signal, it is not necessary to transmit the CRS signal of the port 2 and the port 3 on the OFDM symbol 8, and at this time a CSI-RS signal can be transmitted over a sub-carrier at any frequency on the OFDM symbol 8.

As illustrated in Fig.2, an extended CP is composed of 12 OFDM symbols, numbered respectively an OFDM symbol 0 to an OFDM symbol 11, and the extended CP has 12 sub-carriers in the frequency domain.

The OFDM symbol 8 of the extended CP is not occupied by a control signal, a CRS signal, a DM-RS signal and a DRS signal, and thus a CSI-RS signal can be transmitted over any sub-carrier on the OFDM symbol 8.

Referring to Fig.2, when the extended CP is configured only with a port 0 and a port 1 of a CRS signal but not configured with a port 2 and a port 3 of the CRS signal, it is not necessary to transmit the CRS signal of the port 2 and the port 3 on the OFDM symbol 7, and only a part of the sub-carriers on the OFDM symbol 7 are occupied by a DRS signal, and thus a CSI-RSI signal can be transmitted over the sub-carriers on the OFDM symbol 7, which are not occupied by a DRS signal.

CSI-RS patterns will be given below respectively when the number of CSI-RS ports is 2, 4 and 8. CDM in Fig.3 to Fig.8 below refers to orthogonal multiplexing of two ports by orthogonal cover codes with a length of 2.

In a first embodiment, reference is made to Fig.3 and Fig.4 for a CSI-RS pattern when the number of CSI-RS ports is 2.

A CSI-RS signal is transmitted via two CSI-RS ports from the network side by assigning these two CSI-RS ports to a group of CSI-RS ports.

Fig.3 illustrates CSI-RS patterns of a general CP when the number of CSI-RS ports is 2 according to an embodiment of the invention.

As illustrated in Fig.3, a CSI-RS signal is transmitted over the same sub-carriers of the OFDM symbol 8 and the OFDM symbol 10 or over two adjacent sub-carriers of the OFDM symbol 8 or over two adjacent sub-carriers of the OFDM symbol 10 or over the same sub-carriers of the OFDM symbol 9 and the OFDM symbol 10 (the same sub-carriers are other sub-carriers than sub-carriers occupied by a DRS signal of R8) or over the same sub-carriers of the OFDM symbol 8 and the OFDM symbol 9 (the same sub-carriers are other sub-carriers than sub-carriers occupied by a DRS signal of R8) at the network side in a PRB configured with a general CP when a port 2 and a port 3 of a CSI signal are not configured at the network side.

For example, in 3-A of Fig.3, a CSI-RI signal is transmitted over the same sub-carriers of the OFDM symbol 8 and the OFDM symbol 10 via the group of CSI-RS ports; in 3-B of Fig.3, a CSI-RS signal is transmitted over two adjacent sub-carriers of the OFDM symbol 8 via the group of CSI-RS ports, and although not illustrated in 3-B of Fig.3, a CSI-RI signal can alternatively be transmitted over two adjacent sub-carriers of the OFDM symbol 10 via the group of CSI-RS ports; in 3-C of Fig.3, a CSI-RS signal is transmitted over the same sub-carriers of the OFDM symbol 9 and the OFDM symbol 10 via the group of CSI-RS ports; and in 3-D of Fig.3, a CSI-RI signal is transmitted over the same sub-carriers of the OFDM symbol 8 and the OFDM symbol 9 via the group of CSI-RS ports.

Fig.4 illustrates CSI-RS patterns of an extended CP when the number of CSI-RS ports is 2 according to an embodiment of the invention.

As illustrated in Fig.4, a CSI-RS signal is transmitted over the same sub-carriers of the OFDM symbol 7 and the OFDM symbol 8 (the same sub-carriers are other sub-carriers than sub-carriers occupied by a DRS signal of R8) or two adjacent sub-carriers of the OFDM symbol 7 (the sub-carriers are other sub-carriers than sub-carriers occupied by a DRS signal of R8) or two adjacent sub-carriers of the OFDM symbol 8 at the network side in a PRB configured with an extended CP when a port 2 and a port 3 of a CSI signal are not configured at the network side.

For example, in 4-A of Fig.4, a CSI-RS signal is transmitted over the same sub-carriers of the OFDM symbol 7 and the OFDM symbol 8 via the group of CSI-RS ports; and in 4-B of Fig.4, a CSI-RS signal is transmitted over two adjacent sub-carriers of the OFDM symbol 7 via the group of CSI-RS ports, and although not illustrated in 4-B of Fig.4, a CSI-RS signal can alternatively be transmitted over two adjacent sub-carriers of the OFDM symbol 8 via the group of CSI-RS ports.

In a second embodiment, reference is made to Fig.5 for a CSI-RS pattern when the number of CSI-RS ports is 4.

A CSI-RS signal is transmitted via four CSI-RS ports from the network side by assigning these four CSI-RS ports to two groups of CSI-RS ports, each of which includes two CSI-RS ports.

Fig.5 illustrates CSI-RS patterns of a general CP when the number of CSI-RS ports is 4 and a port 2 and a port 3 of a CSR signal are not configured at the network side according to an embodiment of the invention.

In a PRB configured with a general CP, the same sub-carriers on the OFDM symbol 8 and the OFDM symbol 10 are occupied by each group of CSI-RS ports for transmitting a CSI-RS signal through CDM in the time domain, and the sub-carriers occupied respectively by the two groups of CSI-RS ports are different.

For example, in 5-A of Fig.5, the same sub-carriers on the OFDM symbol 8 and the OFDM symbol 10 are occupied by each group of CSI-RS ports (CSI-RS ports 0 and 1 through CDM and CSI-RS ports 2 and 3 through CDM respectively) for transmitting a CSI-RS signal, and the sub-carriers occupied respectively by the two groups of CSI-RS ports are adjacent; and in 5-B of Fig.5, the same sub-carriers on the OFDM symbol 8 and the OFDM symbol 10 are occupied by each group of CSI-RS ports for transmitting a CSI-RS signal, and the sub-carriers occupied respectively by the two groups of CSI-RS ports are spaced by five sub-carriers.

Or in a PRB configured with a general CP, two adjacent sub-carriers on the OFDM symbol 8 and two adjacent sub-carriers on the OFDM symbol 10 are occupied respectively by each group of CSI-RS ports for transmitting a CSI-RS signal, and the sub-carriers occupied by the two groups of CSI-RS ports are the same or the sub-carriers occupied by the two groups of CSI-RS ports are different.

For example, in 5-C of Fig.5, two adjacent sub-carriers on the OFDM symbol 8 and two adjacent sub-carriers on the OFDM symbol 10 are occupied respectively by the two groups of CSI-RS ports for transmitting a CSI-RS signal, and the sub-carriers occupied by the two groups of CSI-RS ports are the same; and in 5-D of Fig.5, two adjacent sub-carriers on the OFDM symbol 8 and two adjacent sub-carriers on the OFDM symbol 10 are occupied respectively by the two groups of CSI-RS ports for transmitting a CSI-RS signal, and the sub-carriers occupied by the two groups of CSI-RS ports are spaced by four other sub-carriers.

Or in a PRB configured with a general CP, two adjacent sub-carriers are occupied by each group of CSI-RS ports for transmitting a CSI-RS signal, and the CSI-RS signal is transmitted on the OFDM symbol 8 or the OFDM symbol 10 via both of the two groups of CSI-RS ports; and the sub-carriers occupied by the two groups of CSI-RS ports are adjacent or the sub-carriers occupied by the two groups of CSI-RS ports are spaced by another or other sub-carriers.

For example, in 5-E of Fig.5, two adjacent sub-carriers are occupied by each group of CSI-RS ports for transmitting a CSI-RS signal, and the CSI-RS signal is transmitted on the OFDM symbol 8 via both of the two groups of CSI-RS ports; and the sub-carriers occupied by the two groups of CSI-RS ports are adjacent; and in 5-F of Fig.5, two adjacent sub-carriers are occupied by each group of CSI-RS ports for transmitting a CSI-RS signal, and the CSI-RS signal is transmitted on the OFDM symbol 8 via both of the two groups of CSI-RS ports; and there are four carriers borne in a frequency band between the sub-carriers occupied by the two groups of CSI-RS ports. Although not illustrated in 5-E and 5-F, a CSI-RS signal can alternatively be transmitted on the OFDM symbol 10 via both of the two groups of CSI-RS ports, and the carriers occupied by each group of CSI-RS ports are at the same frequencies as those in Fig.5-E and Fig.5-F, and a repeated description thereof will be omitted here.

Or in a PRB configured with a general CP, the same sub-carriers, than sub-carriers occupied by an R8 DRS signal, on the OFDM symbol 9 and the OFDM symbol 10 are occupied by each group of CSI-RS ports for transmitting a CSI-RS signal through CDM in the time domain, and the sub-carriers occupied respectively for the two groups of CSI-RS ports are different, for example, in a CSI-RS pattern illustrated in Fig.5-G.

Fig.6 illustrates CSI-RS patterns of an extended CP when the number of CSI-RS ports is 4 and a port 2 and a port 3 of a CSR signal are not configured at the network side according to an embodiment of the invention.

In a PRB configured with an extended CP, the same sub-carriers on the OFDM symbol 7 and the OFDM symbol 8 are occupied by each group of CSI-RS ports for transmitting a CSI-RS signal, and the two sub-carriers occupied by the two groups of CSI-RS ports are adjacent or the sub-carriers occupied by the two groups of CSI-RS ports are spaced by another or other sub-carriers, for example, in CSI-RS patterns illustrated in 6-A and 6-C of Fig.6.

Or in the extended CP, two adjacent sub-carriers are occupied by each group of CSI-RS ports for transmitting a CSI-RS signal, and the CSI-RS signal is transmitted on the OFDM symbol 7 or the OFDM symbol 8 via both of the two groups of CSI-RS ports, for example, in CSI-RS patterns illustrated in 6-B and 6-D of Fig.6, or the CSI-RS signal is transmitted respectively on the OFDM symbols 7 and 8 via the two groups of CSI-RS ports.

In a third embodiment, reference is made to Fig.7 for a CSI-RS pattern when the number of CSI-RS ports is 8.

A CSI-RS signal is transmitted via eight CSI-RS ports from the network side by assigning these eight CSI-RS ports to four groups of CSI-RS ports, each group includes two CSI-RS ports.

Fig.7 illustrates CSI-RS patterns of a general CP when the number of CSI-RS ports is 8 and a port 2 and a port 3 of a CSR signal are not configured at the network side according to an embodiment of the invention.

In a PRB configured with a general CP, the same sub-carriers on the OFDM symbol 8 and the OFDM symbol 10 are occupied by each group of CSI-RS ports for transmitting a CSI-RS signal, and the sub-carriers occupied by the respective groups of CSI-RS ports are different, for example, the sub-carriers respectively occupied by the four groups of CSI-RS ports are adjacent, or there are two carriers borne in a frequency band between any two least spaced carriers among the carriers occupied by the respective groups of CSI-RS ports, for example, in CSI-RS patterns illustrated in 7-A and 7-B of Fig.7.

Or in a PRB configured with a general CP, two adjacent sub-carriers on the OFDM symbol 8 and/or two adjacent sub-carriers on the OFDM symbol 10 are occupied respectively by the respective groups of CSI-RS ports for transmitting a CSI-RS signal, and the sub-carriers occupied by the four groups of CSI-RS ports are the same or different, for example, the sub-carriers occupied by two groups of CSI-RS ports are adjacent, or there are four or two or one carrier borne in a frequency band between the carriers occupied by two groups of CSI-RS ports, for example, in CSI-RS patterns illustrated in 7-C and 7-H of Fig.7.

Or in a PRB configured with a general CP, two adjacent sub-carriers on the OFDM symbol 8 or two adjacent sub-carriers on the OFDM symbol 10 are occupied respectively by each group of CSI-RS ports for transmitting a CSI-RS signal, and the sub-carriers, occupied by any two groups of CSI-RS ports distributed on the different OFDM symbols, are the same or different, and the sub-carriers, occupied by any two groups of CSI-RS ports distributed on the same OFDM symbols, are adjacent or spaced by another or other sub-carriers.

Or in a PRB configured with a general CP, two adjacent sub-carriers are occupied by each group of CSI-RS ports for transmitting a CSI-RS signal, and the CSI-RS signal is transmitted on the OFDM symbol 8 or the OFDM symbol 10 for all of the four groups of CSI-RS ports; and the sub-carriers occupied by the four groups of CSI-RS ports are adjacent or the sub-carriers occupied by the four groups of CSI-RS ports are spaced at a fixed interval.

Or in a PRB configured with a general CP, the same other sub-carriers, than sub-carriers occupied by an R8 DRS signal, on the OFDM symbol 9 and the OFDM symbol 10 are occupied by each group of CSI-RS ports for transmitting a CSI-RS signal through CDM in the time domain, and the sub-carriers occupied respectively by the four groups of CSI-RS ports are different.

Or in a PRB configured with a general CP, the same other sub-carriers, than sub-carriers occupied by an R8 DRS signal, on the OFDM symbol 10 and the OFDM symbol 11 are occupied by each group of CSI-RS ports for transmitting a CSI-RS signal through CDM in the time domain, and the sub-carriers occupied respectively by the four groups of CSI-RS ports are different.

Fig.8 illustrates CSI-RS patterns of an extended CP when the number of CSI-RS ports is 8 and a port 2 and a port 3 of a CSR signal are not configured at the network side according to an embodiment of the invention.

In a PRB configured with an extended CP, the same other sub-carriers, than sub-carriers occupied by an R8 DRS signal, on the OFDM symbol 7 and the OFDM symbol 8 are occupied by each group of CSI-RS ports for transmitting a CSI-RS signal through CDM in the time domain, and the sub-carriers occupied by any two groups of CSI-RS ports are different, for example, the two sub-carriers are adjacent, or there is one or two or four carriers borne in a frequency band between the sub-carriers occupied by two groups of CSI-RS ports, for example, in CSI-RS patterns illustrated in 8-A, 8-C and 8-D of Fig.8.

Or in a PRB configured with an extended CP, two adjacent sub-carriers on the OFDM symbol 7 or the OFDM symbol 8 are occupied by each group of CSI-RS ports for transmitting a CSI-RS signal through CDM in the frequency domain, for example, in a CSI-RS pattern illustrated in 8-B of Fig.8, where the CSI-RS signal is transmitted over other sub-carriers, than sub-carriers occupied by an R8 DRS signal, on the OFDM symbol 7, or the CSI-RS signal is transmitted on sub-carriers on the OFDM symbol 8, via all of the four groups of CSI-RS ports, or the CSI-RS signal is transmitted respectively over other sub-carriers, than sub-carriers occupied by an R8 DRS signal, on the OFDM symbol 7 and on sub-carriers on the OFDM symbol 8 via the four groups of CSI-RS ports.

In Fig.5 to Fig.8, the port numbers of the respective groups of CSI-RS ports can be swapped, for example, in the PRB illustrated in 8-C of Fig.8, the ports 6 and 7 in the group of CSI-RS ports occupying the sub-carrier 2 by CDM can be swapped with the ports 4 and 5 by CDM occupying the sub-carrier 5 after being ranked in an order of ascending frequencies, that is, the sub-carrier 5 is occupied by the CSI-RS ports 6 and 7 by CDM, and the sub-carrier 2 is occupied by the CSI-RS ports 4 and 5 by CDM.

Moreover CSI-RS patterns obtained after frequency-shifting the CSI-RS patterns illustrated in Fig.3 to Fig.8 will also fall into the scope of the invention, and CSI-RS patterns of a plurality of adjacent cells can be made orthogonal to each other by frequency-shifting the CSI-RS patterns according to cell IDs and other system information to thereby avoid confliction arising from transmission of a CSI-RS signal over the same time and frequency resource in the adjacent cells. For an 8-antenna system, for example, a CSI-RS signal can be transmitted in three adjacent cells over frequency resources which do not overlap at all, that is, there is a multiplexing factor of 3; for a 4-antenna system, for example, a CSI-RS signal can be transmitted in six adjacent cells over frequency resources which do not overlap at all, that is, there is a multiplexing factor of 6; and for a 2-antenna system, for example, a CSI-RS signal can be transmitted in six adjacent cells over frequency resources which do not overlap at all, that is, there is a multiplexing factor of 12.

Fig.9 is a schematic diagram of frequency-shifting a CSI-RS pattern when the number of CSI-RS ports is 8 according to an embodiment of the invention.

As illustrated in Fig.9, a CSI-RS signal is transmitted in a cell 1, a cell 2 and a cell 3 over frequency resources which do not overlap at all, that is, there is a multiplexing factor of 3.

Moreover in a solution based upon CDM in the frequency domain, i.e., a solution in which a CSI-RS signal of a different group of CSI-RS ports is transmitted on a different OFDM symbol, a CSI-RS signal can be transmitted in any two adjacent PRBs alternately on the OFDM symbol 8 and the OFDM symbol 10 via each group of CSI-RS ports so that the CSI-RS signal is transmitted at as high power as possible via the group of CSI-RS ports, and reference is made to Fig.10 for details.

Fig.10 is a schematic diagram of transmitting a CSI-RS signal alternately on the OFDM symbol 8 and the OFDM 10 in any two adjacent PRBs in the frequency domain via a group of CSI-RS ports according to an embodiment of the invention.

As illustrated in Fig.10, the OFDM symbol 8 is occupied by the CSI-RS ports 0 and 1 CDM and the OFDM symbol 10 is occupied by the CSI-RS ports 2 and 3 through CDM in the PRB 1; and instead the OFDM symbol 10 is occupied by the CSI-RS ports 0 and 1 through CDM and the OFDM symbol 8 is occupied by the CSI-RS ports 2 and 3 through CDM in the PRB 1 in the PRB 2.

The invention further provides a method of receiving a Channel State Information Reference Signal in correspondence to the foregoing method of transmitting a Channel State Information Reference Signal.

Specifically a UE receives a Channel State Information Reference Signal CSI-RS, transmitted via an assigned-to group of CSI-RS ports from the network side, on other OFDM symbols than an OFDM symbols for transmitting a control signal, an OFDM symbols for transmitting a Cell specific Reference Signal (CRS) and an OFDM symbols for transmitting a Demodulation Reference Signal (DM-RS) and over other Resource Elements (REs) than REs occupied by a user Dedicated Reference Signal (DRS).

Particularly the UE can receive over different sub-carriers the CSI-RS signal transmitted via different groups of CSI-RS ports and distinguish through Code Division Multiplexing (CDM) in the time domain the CSI-RS signal transmitted over the same sub-carriers via different CSI-RS ports in the same group of CSI-RS ports; or the UE can receive on different OFDM symbols the CSI-RS signal transmitted via different groups of CSI-RS ports and distinguish through CDM in the frequency domain the CSI-RS signal transmitted on the same OFDM symbols via different CSI-RS ports in the same group of CSI-RS ports.

For any group of CSI-RS ports, the UE can receive the CSI-RS signal of the group of CSI-RS ports on different OFDM symbols, or can alternatively receive the CSI-RS signal of the group of CSI-RS ports on the same OFDM symbols, in any two adjacent Physical Resource Blocks (PRBs) in the frequency domain.

In fact, the UE can receive the CSI-RS signal transmitted from the network side on corresponding REs, that is, on corresponding OFDM symbols or over corresponding sub-carriers with respect to any method of transmitting a Channel State Information Reference Signal according to the invention above, e.g., any of the CSI-RS patterns in Fig.3 to Fig.10.

The invention further provides an apparatus for transmitting and an apparatus for receiving a Channel State Information Reference Signal, and reference is made to Fig.11 and Fig.12 for details.

Fig.11 is a schematic structural diagram of an apparatus for transmitting a Channel State Information Reference Signal according to an embodiment of the invention.

As illustrated in Fig.11, the transmitting apparatus includes a resource determining module 1101 and a transmitting module 1102.

The resource determining module 1101 is configured to determine other OFDM symbols than an OFDM symbol for transmitting a control signal, an OFDM symbol for transmitting a Cell specific Reference Signal (CRS) and an OFDM symbol for transmitting a Demodulation Reference Signal (DM-RS); and

The transmitting module 1102 is configured to transmit a Channel State Information Reference Signal, CSI-RS, on the determined other OFDM symbols.

The transmitting module 1102 is particularly configured to transmit the CSI-RS over other Resource Elements (REs), than REs occupied for transmitting a user Dedicated Reference Signal (DRS), on the determined other OFDM symbols, where a sub-carrier on an OFDM symbol is an RE.

The transmitting module 1102 is particularly configured to pre-assign every two ports for transmitting CSI-RS signal to a group of CSI-RS ports and to transmit the CSI-RS signal on the determined other OFDM symbols via the assigned-to group or groups of CSI-RS ports, where the CSI-RS signal is transmitted over different sub-carriers via different groups of CSI-RS ports and the CSI-RS signal transmitted over the same sub-carriers via different CSI-RS ports in the same group of CSI-RS ports is distinguished through Code Division Multiplexing (CDM) in the time domain; or the CSI-RS signal is transmitted on different OFDM symbols via different groups of CSI-RS ports and the CSI-RS signal transmitted on the same OFDM symbols via different CSI-RS ports in the same group of CSI-RS ports is distinguished through CDM in the frequency domain.

Particularly the transmitting module 1102 transmitting the CSI-RS signal on different OFDM symbols via different groups of CSI-RS ports includes transmitting the CSI-RS signal on different OFDM symbols and over different sub-carriers for different groups of CSI-RS ports.

The transmitting module 1102 can further be configured to transmit the CSI-RS signal on different OFDM symbols in any two adjacent Physical Resource Blocks (PRBs) in the frequency domain for any group of CSI-RS ports.

When a Channel State Information Reference Signal, CSI-RS, is transmitted via eight CSI-RS ports, the resource determining module 1101 in the apparatus for transmitting a Channel State Information Reference Signal as illustrated in Fig.11 is configured to determine other Orthogonal Frequency Division Multiplexing (OFDM) symbols than an OFDM symbols for transmitting a control signal, an OFDM symbols for transmitting a Cell specific Reference Signal (CRS) and an OFDM symbols for transmitting a Demodulation Reference Signal (DM-RS); and

The transmitting module 1102 is configured to pre-assign every two CSI-RS signal transmitting ports to a group of CSI-RS ports and to transmit the CSI-RS signal on the determined other OFDM symbols via each group of CSI-RS ports in a Physical Resource Block (PRB) configured with a general Cyclic Prefix (CP), where the same sub-carriers on an Orthogonal Frequency Division Multiplexing (OFDM) symbol 8 and an OFDM symbol 10 in each PRB are occupied by each group of CSI-RS ports for transmitting the CSI-RS signal through Code Division Multiplexing (CDM) in the time domain, and the sub-carriers occupied respectively by the four groups of CSI-RS ports are different; or two adjacent sub-carriers on the OFDM symbol 8 or two adjacent sub-carriers on the OFDM symbol 10 in each PRB are occupied respectively by each group of CSI-RS ports for transmitting the CSI-RS signal, where the sub-carriers, occupied by any two groups of CSI-RS ports, distributed on the different OFDM symbols are the same or different, and the sub-carriers, occupied by any two groups of CSI-RS ports, distributed on the same OFDM symbols are adjacent or spaced by another or other sub-carriers; or two adjacent sub-carriers are occupied by each group of CSI-RS ports for transmitting the CSI-RS signal, and the CSI-RS signal is transmitted on the OFDM symbol 8 or 10 in each PRB via all of the four groups of CSI-RS ports, and the sub-carriers occupied by the four groups of CSI-RS ports are adjacent or the sub-carriers occupied by the four groups of CSI-RS ports are spaced at a fixed interval; or the same other sub-carriers, than sub-carriers occupied by a user Dedicated Reference Signal (DRS) signal, on an OFDM symbol 9 and the OFDM symbol 10 in each PRB are occupied by each group of CSI-RS ports for transmitting the CSI-RS signal through CDM in the time domain, and the sub-carriers occupied respectively for the four groups of CSI-RS ports are different; or the same other sub-carriers, than sub-carriers occupied by a DRS signal, on the OFDM symbol 8 and the OFDM symbol 9 in each PRB are occupied by each group of CSI-RS ports for transmitting the CSI-RS signal through CDM in the time domain, and the sub-carriers occupied respectively for the four groups of CSI-RS ports are different.

Fig.12 is a schematic structural diagram of an apparatus for receiving a Channel State Information Reference Signal according to an embodiment of the invention.

As illustrated in Fig.12, the receiving apparatus includes a resource determining module 1201 and a receiving module 1202.

The resource determining module 1201 is configured to determine other Orthogonal Frequency Division Multiplexing (OFDM) symbols of the network side than an OFDM symbol for transmitting a control signal, an OFDM symbol for transmitting a Cell specific Reference Signal (CRS) and an OFDM symbol for transmitting a Demodulation Reference Signal (DM-RS); and

The receiving module 1202 is configured to receive a Channel State Information Reference Signal, CSI-RS, on the determined other OFDM symbols.

As can apparent from the foregoing solutions, with the invention, an RE occupied by a control signal, an RE occupied by a CRS signal, an RE occupied by a DM-RS signal and an RE occupied by a DRS signal are avoided for a CSI-RS signal, and thus mutual influence can be eliminated between the CSI-RS signal and the control signal, CRS signal, DRS signal and DM-RS signal to thereby ensure no influence of the CSI-RS signal upon other functions of a system.

Moreover no RE occupied by a DRS will be occupied by a CSI-RS signal, and thus subsequent compatibility of a system can be maintained.

The foregoing description is merely illustrative of preferred embodiments of the invention but not intended to limit the invention, and any modifications, equivalent substitutions, adaptations, etc., which can be made without departing from the spirit and principle of the invention shall be encompassed in the claimed scope of the invention.

Those skilled in the art shall appreciate that the embodiments of the invention can be embodied as a method, a system or a computer program product. Therefore the invention can be embodied in the form of an all-hardware embodiment, an all-software embodiment or an embodiment of software and hardware in combination. Furthermore the invention can be embodied in the form of a computer program product embodied in one or more computer useable storage mediums (including but not limited to a disk memory, a CD-ROM, an optical memory, etc.) in which computer useable program codes are contained.

The invention has been described in a flow chart and/or a block diagram of the method, the device (system) and the computer program product according to the embodiments of the invention. It shall be appreciated that respective flows and/or blocks in the flow chart and/or the block diagram and combinations of the flows and/or the blocks in the flow chart and/or the block diagram can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions can also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions can also be loaded onto the computer or the other programmable data processing device so that a series of operational steps are performed on the computer or the other programmable data processing device to create a computer implemented process so that the instructions executed on the computer or the other programmable device provide steps for performing the functions specified in the flow(s) of the flow chart and/or the block(s) of the block diagram.

Although the preferred embodiments of the invention have been described, those skilled in the art benefiting from the underlying inventive concept can make additional modifications and variations to these embodiments. Thus the appended claims are intended to be construed as encompassing the preferred embodiments and all the modifications and variations falling into the scope of the invention.

Evidently those skilled in the art can make various modifications and variations to the embodiments of the invention without departing from the spirit and scope of the invention. Thus the invention is also intended to encompass these modifications and variations thereto so long as the modifications and variations come into the scope of the claims appended to the invention and their equivalents.

## Claims

1. A method for transmitting a Channel State Information Reference Signal, wherein the method comprises:
determining at the network side other Orthogonal Frequency Division Multiplexing, OFDM, symbols than an OFDM symbol for transmitting a control signal, an OFDM symbol for transmitting a Cell specific Reference Signal, CRS, and an OFDM symbol for transmitting a Demodulation Reference Signal, DM-RS; and
transmitting a Channel State Information Reference Signal, CSI-RS, on the determined other OFDM symbols.

2. The method according to claim 1, wherein transmitting a CSI-RS on the determined other OFDM symbols comprises:
transmitting the CSI-RS over other Resource Elements, REs, than REs occupied for transmitting a user Dedicated Reference Signal, DRS, on the determined other OFDM symbols, wherein a sub-carrier on an OFDM symbol is an RE.

3. The method according to claim 1, wherein transmitting a CSI-RS on the determined other OFDM symbols comprises:
transmitting at the network side the CSI-RS signal on the determined other OFDM symbols via a pre-assigned-to group or groups of CSI-RS ports, and
wherein every two ports for transmitting CSI-RS are assigned to a group of CSI-RS ports, the CSI-RS signal is transmitted over different sub-carriers via different groups of CSI-RS ports, and the CSI-RS signal transmitted over the same sub-carriers via different CSI-RS ports in the same group of CSI-RS ports is distinguished through Code Division Multiplexing, CDM, in the time domain; or
the CSI-RS signal is transmitted on different OFDM symbols via different groups of CSI-RS ports, and the CSI-RS signal transmitted on the same OFDM symbols via different CSI-RS ports in the same group of CSI-RS ports is distinguished through CDM in the frequency domain.

4. The method according to claim 3, wherein the transmitting the CSI-RS signal on different OFDM symbols via different groups of CSI-RS ports comprises:
transmitting the CSI-RS signal on different OFDM symbols in any two adjacent Physical Resource Blocks, PRBs, in the frequency domain via any group of CSI-RS ports.

5. The method according to claim 1, wherein transmitting a CSI-RS on the determined other OFDM symbols comprises:
transmitting the CSI-RS signal over orthogonal sub-carriers on the same OFDM symbols among the other OFDM symbols in a predetermined number of adjacent cells; or transmitting the CSI-RI signal on different OFDM symbols among the other OFDM symbols in a predetermined number of adjacent cells; or transmitting the CSI-RS signal on different OFDM symbols among the other OFDM symbols and over orthogonal sub-carriers in combination in a predetermined number of adjacent cells.

6. The method according to any one of claims 1 to 5, wherein each PRB configured with a general Cyclic Prefix, CP, is composed of 14 OFDM symbols in the time domain numbered from 0 to 13 and 12 sub-carriers in the frequency domain, and transmitting a CSI-RS on the determined other OFDM symbols comprises:
transmitting the CSI-RS over any sub-carriers on an OFDM symbol 10, or sub-carriers, which are not occupied by a DRS signal, on an OFDM symbol 3 and an OFDM symbol 9, or any sub-carriers, over which no CRS signal is transmitted, on an OFDM symbol 8 in each PRB.

7. The method according to claim 6, wherein when the CSI-RS signal is transmitted via two CSI-RS ports from the network side, in a PRB configured with a general CP, transmitting a CSI-RS on the determined other OFDM symbols comprises:
transmitting at the network side the CSI-RS signal of each group of CSI-RS ports through CDM in the time domain or CDM in the frequency domain over the same sub-carriers on the OFDM symbol 8 and the OFDM symbol 10, or over two adjacent sub-carriers on the OFDM symbol 8, or over two adjacent sub-carriers on the OFDM symbol 10, or over the same other sub-carriers, than sub-carriers occupied by a DRS signal, on the OFDM symbol 9 and the OFDM symbol 10, or over the same other sub-carriers, than sub-carriers occupied by a DRS signal, on the OFDM symbol 8 and the OFDM symbol 9 in each PRB.

8. The method according to claim 6, wherein when the CSI-RS signal is transmitted via four CSI-RS ports from the network side, in a PRB configured with a general CP, transmitting a CSI-RS on the determined other OFDM symbols comprises:
for assigned-to groups of CSI-RS ports, transmitting the CSI-RS signal at the network side through CDM in the time domain over the same sub-carriers, on the OFDM symbol 8 and the OFDM symbol 10 in each PRB for each group of CSI-RS ports, wherein the sub-carriers occupied respectively by the two groups of CSI-RS ports are different; or
transmitting the CSI-RS signal over two adjacent sub-carriers on the OFDM symbol 8 or two adjacent sub-carriers on the OFDM symbol 10 respectively in each PRB for each group of CSI-RS ports, wherein the sub-carriers occupied by the two groups of CSI-RS ports are the same or the sub-carriers occupied by the two groups of CSI-RS ports are different; or
transmitting the CSI-RS signal over two adjacent sub-carriers for each group of CSI-RS ports, wherein the CSI-RS signal is transmitted on the OFDM symbol 8 or the OFDM symbol 10 in each PRB via both of the two groups of CSI-RS ports, and the sub-carriers for the two groups of CSI-RS ports are adjacent or the sub-carriers for the two groups of CSI-RS ports are spaced by another or other sub-carriers; or
transmitting the CSI-RS signal through CDM in the time domain over the same other sub-carriers, than sub-carriers occupied by a DRS signal, on the OFDM symbol 9 and the OFDM symbol 10 in each PRB, for each group of CSI-RS ports, wherein the sub-carriers respectively for two groups of CSI-RS ports are different; or
transmitting the CSI-RS signal through CDM in the time domain over the same other sub-carriers, than sub-carriers occupied by a DRS signal, on the OFDM symbol 8 and the OFDM symbol 9 in each PRB, for each group of CSI-RS ports, wherein the sub-carriers respectively for the two groups of CSI-RS ports are different.

9. The method according to claim 6, wherein when the CSI-RS signal is transmitted via eight CSI-RS ports from the network side, in a PRB configured with a general CP, transmitting a CSI-RS on the determined other OFDM symbols comprises:
for assigned-to groups of CSI-RS ports, transmitting the CSI-RS signal at the network side through CDM in the time domain over the same sub-carriers, on the OFDM symbol 8 and the OFDM symbol 10 in each PRB, for each group of CSI-RS ports, wherein the sub-carriers respectively for the four groups of CSI-RS ports are different; or
transmitting the CSI-RS signal over two adjacent sub-carriers, on the OFDM symbol 8 or two adjacent sub-carriers, on the OFDM symbol 10 in each PRB, for each group of CSI-RS ports, wherein the sub-carriers, for any two groups of CSI-RS ports, distributed on the different OFDM symbols are the same or different, and the sub-carriers, for any two groups of CSI-RS ports, distributed on the same OFDM symbols are adjacent or spaced by another or other sub-carriers.; or
transmitting the CSI-RS signal over two adjacent sub-carriers for each group of CSI-RS ports, wherein the CSI-RS signal is transmitted on the OFDM symbol 8 or 10 in each PRB via all of the four groups of CSI-RS ports; and the sub-carriers for the four groups of CSI-RS ports are adjacent or the sub-carriers for the four groups of CSI-RS ports are spaced at a fixed interval;
transmitting the CSI-RS signal through CDM in the time domain over the same other sub-carriers, than sub-carriers occupied by a DRS signal, on the OFDM symbol 9 and the OFDM symbol 10 in each PRB, for each group of CSI-RS ports, wherein the sub-carriers respectively for the four groups of CSI-RS ports are different; or
transmitting the CSI-RS signal through CDM in the time domain over the same other sub-carriers, than sub-carriers occupied by a DRS signal, on the OFDM symbol 8 and the OFDM symbol 9 in each PRB, for each group of CSI-RS ports, wherein the sub-carriers respectively for the four groups of CSI-RS ports are different.

10. An apparatus for transmitting a Channel State Information Reference Signal, wherein the apparatus comprises a resource determining module and a transmitting module, and wherein:
the resource determining module is configured to determine other Orthogonal Frequency Division Multiplexing, OFDM, symbols than an OFDM symbol for transmitting a control signal, an OFDM symbol for transmitting a Cell specific Reference Signal, CRS, and an OFDM symbol for transmitting a Demodulation Reference Signal, DM-RS; and
the transmitting module is configured to transmit a Channel State Information Reference Signal CSI-RS on the determined other OFDM symbols.

11. The apparatus according to claim 10, wherein the transmitting module is further configured to transmit the CSI-RS over other Resource Elements, REs, than REs occupied for transmitting a user Dedicated Reference Signal, DRS, on the determined other OFDM symbols, wherein a sub-carrier on an OFDM symbol is an RE.

12. The apparatus according to claim 10, wherein the transmitting module is further configured to pre-assign every two ports for transmitting CSI-RS to a group of CSI-RS ports and to transmit the CSI-RS signal on the determined other OFDM symbols via the assigned-to group or groups of CSI-RS ports, wherein the CSI-RS signal is transmitted over different sub-carriers via different groups of CSI-RS ports and the CSI-RS signal transmitted over the same sub-carriers via different CSI-RS ports in the same group of CSI-RS ports is distinguished through Code Division Multiplexing, CDM, in the time domain; or the CSI-RS signal is transmitted on different OFDM symbols via different groups of CSI-RS ports and the CSI-RS signal transmitted on the same OFDM symbols via different CSI-RS ports in the same group of CSI-RS ports is distinguished through CDM in the frequency domain.

13. The apparatus according to claim 12, wherein:
the transmitting module is further configured to transmit the CSI-RS signal on different OFDM symbols in any two adjacent Physical Resource Blocks, PRBs in the frequency domain for any group of CSI-RS ports.

14. A method for transmitting a Channel State Information Reference Signal, wherein the method comprises:
when a Channel State Information Reference Signal, CSI-RS, is transmitted via eight CSI-RS ports from the network side, pre-assigning every two ports for transmitting CSI-RS signal to a group of CSI-RS ports;
determining at the network side other Orthogonal Frequency Division Multiplexing, OFDM, symbols than an OFDM symbol for transmitting a control signal, an OFDM symbol for transmitting a Cell specific Reference Signal, CRS, and an OFDM symbol for transmitting a Demodulation Reference Signal, DM-RS; and
transmitting the CSI-RS signal on the determined other OFDM symbols via each group of CSI-RS ports in a Physical Resource Block, PRB, configured with a general Cyclic Prefix, CP, by:
transmitting the CSI-RS signal through Code Division Multiplexing, CDM, in the time domain over the same sub-carriers, on an OFDM symbol 8 and an OFDM symbol 10 in each PRB, for each group of CSI-RS ports, wherein the sub-carriers respectively for the four groups of CSI-RS ports are different; or
transmitting the CSI-RS signal over two adjacent sub-carriers on the OFDM symbol 8 or two adjacent sub-carriers on the OFDM symbol 10 in each PRB, for each group of CSI-RS ports, wherein the sub-carriers, for any two groups of CSI-RS ports, distributed on the different OFDM symbols are the same or different, and the sub-carriers, for any two groups of CSI-RS ports, distributed on the same OFDM symbols are adjacent or spaced by another or other sub-carriers.; or
transmitting the CSI-RS signal over two adjacent sub-carriers for each group of CSI-RS ports, wherein the CSI-RS signal is transmitted on the OFDM symbol 8 or 10 in each PRB via all of the four groups of CSI-RS ports; and the sub-carriers for the four groups of CSI-RS ports are adjacent or the sub-carriers for the four groups of CSI-RS ports are spaced at a fixed interval;
transmitting the CSI-RS signal through CDM in the time domain over the same other sub-carriers, than sub-carriers occupied by a user Dedicated Reference Signal, DRS, signal, on an OFDM symbol 9 and the OFDM symbol 10 in each PRB, for each group of CSI-RS ports, wherein the sub-carriers respectively for the four groups of CSI-RS ports are different; or
transmitting the CSI-RS signal through CDM in the time domain over the same other sub-carriers, than sub-carriers occupied by a DRS signal, on the OFDM symbol 8 and the OFDM symbol 9 in each PRB, for each group of CSI-RS ports, wherein the sub-carriers respectively for the four groups of CSI-RS ports are different.

15. An apparatus for transmitting a Channel State Information Reference Signal, wherein the apparatus comprises a resource determining module and a transmitting module, and wherein:
the resource determining module is configured to determine other Orthogonal Frequency Division Multiplexing, OFDM, symbols than an OFDM symbol for transmitting a control signal, an OFDM symbol for transmitting a Cell specific Reference Signal, CRS, and an OFDM symbol for transmitting a Demodulation Reference Signal, DM-RS; and
the transmitting module is configured, when a Channel State Information Reference Signal, CSI-RS, is transmitted via eight CSI-RS ports, to pre-assign every two ports for transmitting the CSI-RS signal to a group of CSI-RS ports and to transmit the CSI-RS signal on the determined other OFDM symbols via each group of CSI-RS ports in a Physical Resource Block, PRB, configured with a general Cyclic Prefix, CP, wherein the same sub-carriers on an Orthogonal Frequency Division Multiplexing, OFDM, symbol 8 and an OFDM symbol 10 in each PRB are occupied by each group of CSI-RS ports for transmitting the CSI-RS signal through Code Division Multiplexing, CDM, in the time domain, and the sub-carriers occupied respectively by the four groups of CSI-RS ports are different; or two adjacent sub-carriers on the OFDM symbol 8 or two adjacent sub-carriers on the OFDM symbol 10 in each PRB are occupied respectively by each group of CSI-RS ports for transmitting the CSI-RS signal, wherein the sub-carriers, occupied by any two groups of CSI-RS ports, distributed on the different OFDM symbols are the same or different, and the sub-carriers, occupied by any two groups of CSI-RS ports, distributed on the same OFDM symbols are adjacent or spaced by another or other sub-carriers; or two adjacent sub-carriers are occupied by each group of CSI-RS ports for transmitting the CSI-RS signal, and the CSI-RS signal is transmitted on the OFDM symbol 8 or 10 in each PRB via all of the four groups of CSI-RS ports, and the sub-carriers occupied by the four groups of CSI-RS ports are adjacent or the sub-carriers occupied by the four groups of CSI-RS ports are spaced at a fixed interval; or the same other sub-carriers, than sub-carriers occupied by a user Dedicated Reference Signal, DRS, signal, on an OFDM symbol 9 and the OFDM symbol 10 in each PRB are occupied by each group of CSI-RS ports for transmitting the CSI-RS signal through CDM in the time domain, and the sub-carriers occupied respectively for the four groups of CSI-RS ports are different; or the same other sub-carriers, than sub-carriers occupied by a DRS signal, on the OFDM symbol 8 and the OFDM symbol 9 in each PRB are occupied by each group of CSI-RS ports for transmitting the CSI-RS signal through CDM in the time domain, and the sub-carriers occupied respectively for the four groups of CSI-RS ports are different.

16. A method for receiving a Channel State Information Reference Signal, wherein the method comprises:
a User Equipment, UE, determining other Orthogonal Frequency Division Multiplexing, OFDM, symbols at the network side than an OFDM symbol for transmitting a control signal, an OFDM symbol for transmitting a Cell specific Reference Signal, CRS, and an OFDM symbol for transmitting a Demodulation Reference Signal, DM-RS; and
receiving a Channel State Information Reference Signal, CSI-RS, over the determined other OFDM symbols.

17. The method according to claim 16, wherein receiving a CSI-RS over the determined other OFDM symbols comprises:
receiving the CSI-RS transmitted from the network side over other Resource Elements, REs, than REs occupied for transmitting a user Dedicated Reference Signal, DRS, on the determined other OFDM symbols, wherein a sub-carrier on an OFDM symbol is an RE.

18. The method according to claim 16, wherein receiving a CSI-RS over the determined other OFDM symbols comprises:
the UE receiving the CSI-RS transmitted via a pre-assigned-to group or groups of CSI-RS ports from the network side, and
wherein the UE receives, over different sub-carriers, the CSI-RS signal transmitted via different groups of CSI-RS ports and distinguishes the CSI-RS signal transmitted over the same sub-carriers via different CSI-RS ports in the same group of CSI-RS ports through Code Division Multiplexing, CDM, in the time domain; or
the UE receives, on different OFDM symbols, the CSI-RS signal transmitted via different groups of CSI-RS ports and distinguishes the CSI-RS signal transmitted on the same OFDM symbols via different CSI-RS ports in the same group of CSI-RS ports through CDM in the frequency domain.

19. The method according to claim 18, wherein
for any group of CSI-RS ports, the UE receives the CSI-RS signal of the group of CSI-RS ports on different OFDM symbols in any two adjacent Physical Resource Blocks, PRBs, in the frequency domain.

20. An apparatus for receiving a Channel State Information Reference Signal, wherein the apparatus comprises a resource determining module and a transmitting module, and wherein:
the resource determining module is configured to determine other Orthogonal Frequency Division Multiplexing, OFDM, symbols at the network side than an OFDM symbol for transmitting a control signal, an OFDM symbol for transmitting a Cell specific Reference Signal, CRS, and an OFDM symbol for transmitting a Demodulation Reference Signal, DM-RS; and
the receiving module is configured to receiving a Channel State Information Reference Signal, CSI-RS, on the determined other OFDM symbols.
